# EUROPÄISCHE PATENTANMELDUNG

(11) **EP 2 296 214 A1**
(43) Veröffentlichungstag der Anmeldung: **16.03.2011**
(21) Anmeldenummer: 10173383.0
(22) Anmeldetag: 19.08.2010
(51) Int. Cl.: H01M 10/48

(54) **Vorrichtung zur Überwachung eines Energiespeichers**

(30) Priorität: 09.09.2009 DE 102009040663
(71) Anmelder: Hoppecke Advanced Battery Technology GmbH, 08056 Zwickau (DE)
(72) Erfinder: Lehmann, Gerhard, 79367, Weisweil (DE)
(74) Vertreter: Vogel, Andreas

(57) **Zusammenfassung**

Die Erfindung betrifft eine Vorrichtung zur Überwachung eines Energiespeichers (10), der wenigstens eine Energiezelle (11) aufweist, aus der zumindest ein Betriebsparameter (1,2) über eine Elektronikeinheit (20) auslesbar ist, wobei der Betriebsparameter (1,2) einer Zentraleinheit (30) übertragbar ist.

Erfindungsgemäß ist vorgesehen, dass die Zentraleinheit (30) galvanisch von der Elektronikeinheit (20) getrennt ist, deren energetische Versorgung über den Energiespeicher (10) erfolgt.

## Beschreibung

Die Erfindung betrifft eine Vorrichtung zur Überwachung eines Energiespeichers, der wenigstens eine Energiezelle aufweist, aus der zumindest ein Betriebsparameter über eine Elektronikeinheit auslesbar ist, wobei der Betriebsparameter einer Zentraleinheit übertragbar ist.

Es ist bekannt, dass moderne Energiespeicher eine Vielzahl von Energiezellen aufweisen. Derartige Energiespeicher, insbesondere Batterien können dabei lineare Abmessungen von bis zu 10 m zu haben, wobei sich im Raum mehrere solcher Energiespeicher befinden können. Derartige Energie- oder Batteriespeicher können sich beispielsweise dadurch auszeichnen, dass die einzelnen Energiezellen, insbesondere Batteriezellen auf ihre physikalischen Eigenschaften und Betriebsparameter hin voneinander unabhängig überwacht werden können und sollen. Dieses kann einerseits eine Optimierung der Lade-und Entladevorgänge der Energiezellen ermöglichen und andererseits ermöglichen, schadhafte Energiezellen schnell zu erkennen und frühzeitig auszutauschen.

Nachteiligerweise hat sich gezeigt, dass die einzelnen Energiezellen, die oft in Reihenschaltung innerhalb des Energiespeichers angeordnet sind, mit Fertigungstoleranzen behaftet sind, so dass ihre Kapazität Abweichungen gegenüber der Nennkapazität aufweist. Im Betrieb können einzelne Energiezellen ebenfalls unterschiedlich altern, so dass sich eine zusätzliche Betriebstoleranz ergibt. Aufgrund unterschiedlicher Betriebstemperaturen und je nach Art des Energiespeichers, der ebenfalls als Akkumulator bezeichnet werden kann, kann die Selbstentladerate in einigen Energiezellen höher sein als in anderen Zellen. Bei ständigem Entladen und Laden der Energiezellen kann es deshalb zu Ladezustands- und Kapazitätsabweichungen kommen, so dass die Energiezellen geringster Kapazität das Entladeende erreichen, während andere Zellen des gleichen Energiespeichers noch genügend geladen sind. Bei hoher Belastung des Energiespeichers kann es daher beim Entladeende zu einer totalen Entladung einzelner Energiezellen des Energiespeichers mit anschließender Potenzialumkehr bzw. -umpolung kommen. Dadurch können die Energiezellen irreparabel geschädigt werden. Beim Ladevorgang werden dagegen die Energiezellen mit geringerer Kapazität zuerst aufgeladen, während andere Energiezellen noch nicht den Endpunkt der Ladung erreicht haben. Das Ladungsende der zuerst voll geladenen Energiezelle wird nicht festgestellt, so dass diese Energiezellen dann überladen werden und je nach Art des verwendeten Energiespeichers Schädigungen durch die Überladung auftreten können.

Aus dem Stand der Technik sind bereits Systeme entwickelt worden, die es gestatten, die einzelnen Energiezellen des Energiespeichers mit parallelen Leitungen derart zu verbinden, dass von einem zentralen Ladegerät aus die einzelnen Energiezellen nachgeladen werden können. Mit einer derartigen Anordnung ist es möglich, nach einer Hauptentladung alle Energiezellen auf einen gleichen Ladezustand zu bringen. Grundsätzlich lässt sich mit einem solchen System auch die Nachladung einzelner Energiezellen ermöglichen. In der DE OS 41 31 732 ist beispielsweise ein derartiges System beschrieben, bei dem viele parallele Leitungen zu einem zentralen Lade- und Überwachungsgerät geführt werden. Die Verwendung derartiger kabelgebundener Überwachungssysteme zwischen den Energiezellen und einer zentralen Überwachungseinheit sind jedoch aufwändig.

Der Erfindung liegt die Aufgabe zugrunde, eine Vorrichtung zur Überwachung eines Energiespeichers zu schaffen, bei dem die oben genannten Nachteile vermieden werden, insbesondere eine Vorrichtung vorgeschlagen wird, mit der auf einfache Art und Weise eine Überwachung des Energiespeichers, insbesondere der Energiezelle durchgeführt werden kann.

Diese Aufgabe wird erfindungsgemäß durch sämtliche Merkmale des Patentanspruches 1 gelöst. In den abhängigen Patentansprüchen sind mögliche Ausführungsformen beschrieben.

Erfindungsgemäß ist vorgesehen, dass die Zentraleinheit galvanisch von der Elektronikeinheit getrennt ist, deren energetische Versorgung über den Energiespeicher erfolgt. Der Kern der Erfindung ist es hierbei, über die galvanische Trennung der Zentraleinheit von der Elektronikeinheit, insbesondere von den einzelnen Energiezellen einen weniger aufwändigen Schaltungsaufwand zur Übertragung der Betriebsparameter zur Zentraleinheit erzielen zu können. Zusätzlich sorgt die galvanische Trennung für eine elektrische Betriebssicherheit, bei der eine Schutztrennung zwischen dem Energiespeicher mit seiner Peripherie und der Zentraleinheit erfolgt. Da die Energiespeicher Spannungen von mehreren hundert Volt aufweisen können, ist eine Gefährdung der Zentraleinheit oder des Benutzers, der die Zentraleinheit bedient, in einem elektrischen Fehlerfall des Energiespeichers ausgeschlossen. Eventuell auftretende Fehlerströme in einem Fehlerfall des Energiespeichers können nicht über die Zentraleinheit oder den Benutzer abgeleitet werden, was die Sicherheit für den Benutzer und die Zentraleinheit erhöht. Zudem wird dadurch ein wirksamer Schutz gegen elektromagnetische Störungen bewirkt.

Vorteilhaft ist, dass die Elektronikeinheit eine erste Kommunikationsschnittstelle aufweist und die Zentraleinheit eine zweite Kommunikationsschnittstelle aufweist, insbesondere die erste und/oder die zweite Kommunikationsschnittstelle eine Sende- und/oder Empfangseinheit aufweist. Hierbei ist es denkbar, dass die Betriebsparameter optisch über den Freiraum und/oder über Funk und/oder optisch über wenigstens einen Lichtwellenleiter übermittelbar sind. Die Betriebsparameter, die aktuelle, zeitnahe Zustandsinformationen des Energiespeichers, insbesondere der Energiezelle wiedergeben, können beispielsweise die Energiezellenspannung der jeweiligen Energiezelle und/oder die Energiezellentemperatur der jeweiligen Energiezelle sein. Über die erfindungsgemäße Art der Übermittlung der Betriebsparameter können die gemessenen Werte der Betriebsparameter auf einfache, robuste Weise an die Zentraleinheit zum Zwecke der dortigen Auswertung übermittelt werden. Vorteilhafterweise können über die Auswertung der übertragenen Betriebsparameter einzelne Energiezellen des Energiespeichers auf einen bestimmten definierten Ladezustand gebracht werden, insbesondere können nachgeladen werden, wenn eine entsprechende Nachladung erforderlich sein sollte.

Der Lichtwellenleiter kann beispielsweise eine Plastikfaser sein. Hinsichtlich der Lichtwellenleiter sind beispielsweise Multimode- oder Singlemode-Fasern denkbar. Die Lichtwellenleiter gemäß der vorliegenden Erfindung können vorzugsweise mit einer Übertragungsstrecke ausgeführt sein, die einen optischen Sender, ein Glasfaserkabel, insbesondere mit Repeatern zur Nachverstärkung und Signalregeneration sowie einen optischen Empfänger aufweisen. Die optischen Sender können beispielsweise LEDs oder Laserdioden sein. Die optischen Empfänger können beispielsweise als PIN-Dioden oder Avalanche-Dioden ausgeführt sein.

In einer möglichen Ausführungsform der Erfindung kann jede Energiezelle dediziert einer Elektronikeinheit zugeordnet werden. Ebenfalls ist es in einer alternativen Ausgestaltung der Erfindung möglich, dass allen Energiezellen eine gemeinsame Elektronikeinheit zugeordnet ist. Die Energiezellen untereinander können in Reihe, parallel oder auch in anderer Art und Weise geschaltet sein.

Um die Übertragungssicherheit zwischen dem Energiespeicher und der Zentraleinheit zu erhöhen, kann es in einer Ausführungsform denkbar sein, die Betriebsparameter sowohl optisch über den Freiraum und über Funk oder optisch über den Freiraum und optisch über den Lichtwellenleiter oder über Funk und optisch über den Lichtwellenleiter an die Zentraleinheit zu übermitteln. Beispielsweise ist es möglich, die Betriebsparameter parallel auf den soeben genannten Wegen zu übertragen.

In einer die Erfindung verbessernden Maßnahme kann vorgesehen sein, dass die Elektronikeinheit und die Zentraleinheit einen Informationsgehalt der Betriebsparameter über ein Protokoll austauschen, das Telegramme mit einer Länge von 32 Bit und bis 256 Bit, insbesondere mit einer Länge von 54 Bit bis 128 Bit austauscht. Vorteilhafterweise können diskrete Zeitabstände vorgesehen sein, in denen eine Übertragung der Betriebsparameter durch die Elektronikeinheit erfolgt, insbesondere in einem Intervall von mindestens 1 Sekunde eine Übertragung der Betriebsparameter durch die Elektronikeinheit erfolgt. Längere zeitliche Abstände sind ebenfalls denkbar. Hierbei kann die Übermittlung der in einem bestimmten Zeitabstand ermittelten Werte der Betriebsparameter in einem einzelnen Telegramm erfolgen.

Die Übertragung der Betriebsparameter kann über wenigstens eine der folgenden Technologien erfolgen:
- Funk: Bluetooth, Near Field Communination (NFC), Wireless Local Area Network (WLAN), WiMAX, Wireless USB, ZigBee (IEEE 802.15.4), Wibree, WPAN, GSM, GPRS, UMTS, HSCSD oder HSDPA
- induktive Datenübertragung, kapazitive Datenübertragung,
- optische Freiraumübertragung: Infrared Data Association (IrDA), FSO (Free Space Optics),
- Übertragung über Lichtwellenleiter

Vorteilhafterweise erfolgt die Übertragung über ZigBee. ZigBee stellt einen Protokollstapel dar, der es ermöglicht eine energiesparende Datenübertragung, insbesondere in einem Bereich von 10m bis 100m zu ermöglichen. Dabei kann der Protokollstapel auf den IEEE 802.15.4 Standard aufgesetzt werden, der die unteren beiden Schichten des ISO/OSI-Modells spezifiziert. ZigBee bietet im Gegensatz zu anderen Funktechnologien wie z.B. Bluetooth den Vorteil, dass eine energetische Versorgung einer ZigBee-Einheit, insbesondere der Elektronikeinheit und/oder der Kommunikationsschnittstellen und/oder der Zentraleinheit durch eine Batteriezelle zwischen 6 Monaten und 2 Jahren erreicht werden kann.

Es kann zweckmäßigerweise vorgesehen sein, dass das Protokoll zur Übertragung der Betriebsparameter über den ZigBee-Standard erfolgt, wobei die physikalische Übertragung des Informationsgehaltes der Betriebsparameter optisch erfolgt, insbesondere über den IrDA-Standard erfolgt. Dies ermöglicht ein größeres Spektrum an Möglichkeiten, in dem eine Übertragung über Funk nicht erwünscht ist. Dies kann z.B. für eine erhöhte erforderliche Abhörsicherheit der Fall sein. Somit kann ZigBee als Grundlage der optischen Übertragung verwendet werden, wodurch ebenfalls ein Kostenvorteil gegenüber funkbasierter Komponenten erzielt werden kann.

In einer Ausgestaltung der erfindungsgemäßen Vorrichtung können zwischen der Elektronikeinheit und der Zentraleinheit eine Vielzahl an Lichtwellenleiter angeordnet sein, die in einen optischen Sammellichtleiter führen, wobei der Sammellichtleiter über zumindest einen Lichtwellenleiter mit der Zentralreinheit verbunden ist.

Vorteilhafterweise weist die Elektronikeinheit ein Sensorelement für jede Energiezelle auf, wobei das Sensorelement mindestens einen Betriebsparameter erfasst. Hierbei ist es denkbar, dass die Elektronikeinheit das Sensorelement ist, welches mit einer ersten Kommunikationsschnittstelle ausgeführt ist, über die der jeweilige Betriebsparameter an die zweite Kommunikationsschnittstelle der Zentraleinheit übermittelbar ist.

Um den konstruktiven Aufwand von Überwachungssystemen von Energiespeichern weiter zu reduzieren ist es vorteilhaft, dass die erfindungsgemäße Vorrichtung über eine gemeinsame Zentraleinheit mit einer Vielzahl von Energiespeichern, insbesondere mit ihren jeweiligen Energiezellen kommunizieren kann.

Die Übertragung der Betriebsparameter zwischen der Elektronikeinheit und der Zentraleinheit kann bidirektional erfolgen.

Vorteilhafterweise kann die Zentraleinheit anhand der Betriebsparameter den Betrieb des Energiespeichers, insbesondere der Energiezelle steuern und/oder regeln. Die Zentraleinheit kann hierbei derart konfiguriert sein, dass nach entsprechenden Kriterien, insbesondere der jeweiligen Betriebsparameter eine oder mehrere Energiezellen vom Zellverbund des Energiespeichers, insbesondere des Akkumulators getrennt werden, welches beispielsweise beim Entladen des Energiespeichers auftreten kann. Zudem kann bei einem Ladenvorgang der Energieeinheit die Zentraleinheit anhand der Betriebsparameter entscheiden, welche Energiezellen zunächst in einem Zellverbund in Reihe zu schalten sind und somit aufzuladen sind. Haben beispielsweise die im Zellverbund zunächst geladenen Energiezellen einen bestimmten Betriebsparameter, insbesondere Ladezustand erreicht, kann die Zentraleinheit entscheiden, welche weiteren, noch aufzuladenen Energiezellen für den Ladevorgang hinzugeschaltet werden, um einen nächst höheren Wert des Betriebsparameters, insbesondere einen nächst höheren Ladezustand zu erreichen.

Ebenfalls kann alternativ und/oder zusätzlich vorgesehen sein, dass die Energiezellen untereinander die Betriebsparameter austauschen. Die Datenkommunikation zwischen den Energiezellen kann ebenfalls optisch und/oder über Funk und/oder über Lichtwellenleiter erfolgen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine mögliche Vorrichtung zur Überwachung eines Energiespeichers,
- Figur 2: eine weitere Ausgestaltungsmöglichkeit einer Vorrichtung zur Überwachung eines Energiespeichers,
- Figur 3: eine weitere Alternative einer Vorrichtung zur Überwachung eines Energiespeichers und
- Figur 4: eine weitere Ausführungsform einer Vorrichtung zur Überwachung eines Energiespeichers.

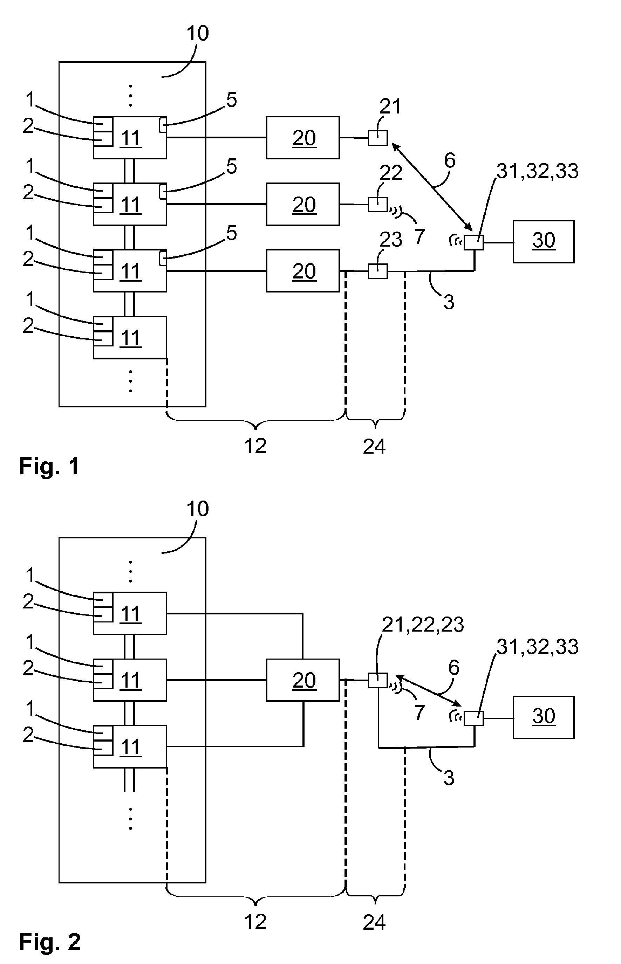

Gemäß Figur 1 bis 4 ist jeweils ein Energiespeicher 10 rein schematisch dargestellt, der eine nicht näher dargestellte Vielzahl von einzelnen Energiezellen 11 aufweist. Hinsichtlich der Figur 1 ist jede Energiezelle 11 mit einer Elektronikeinheit 20 verbunden. Über die Elektronikeinheit 20 lassen sich unter anderem Betriebparameter 1, 2 jeder einzelnen Energiezelle 11 auslesen. Die Betriebsparameter 1, 2 können unter anderem aktuelle Zustandsinformationen der Energiezelle 11 sein, wie der Betriebsparameter 1, der die aktuelle Energiezellentemperatur wiedergibt, und der Betriebsparameter 2, der die aktuelle Energiezellenspannung wiedergibt. Die energetische Versorgung der Elektronikeinheit 20 erfolgt über den Energiespeicher 10.

Die herausgelesenen Betriebsparameter 1, 2 werden gemäß aller Ausführungsbeispiele an eine Zentraleinheit 30 übertragen. Hierbei ist die Zentraleinheit 30 galvanisch von der Elektronikeinheit 20 getrennt. In Figur 1 sind schematisch drei Elektronikeinheiten 20 dargestellt, die jeweils mit einer Energiezelle 11 verbunden sind. Jede Elektronikeinheit 20 ist mit einer ersten Kommunikationsschnittstelle 21, 22, 23 ausgeführt. Des Weiteren weist die Zentraleinheit 30 ebenfalls eine zweite Kommunikationsschnittstelle 31, 32, 33 auf. Über die genannten Kommunikationsschnittstellen 21, 22, 23, 31, 32, 33 können die Betriebsparameter 1, 2 zur Zentraleinheit 30 übertragen werden.

Figur 1 zeigt schematisch, dass in einem möglichen Ausführungsbeispiel die Betriebsparameter 1, 2 über eine Funkübertragung 6 von der ersten Kommunikationsschnittstelle 21 zur zweiten Kommunikationsschnittstelle 31 übertragen werden können, das bedeutet, dass sämtliche Elektronikeinheiten 20 mit einer ersten Kommunikationsschnittstelle 21 zur Funkübertragung ausgeführt sein können, wobei die zweite Kommunikationsschnittstelle 31 zum Empfang der Betriebsparameter 1, 2 entsprechend ausgestaltet ist, um diese Betriebsparameter 1, 2 zu empfangen und der Zentraleinheit 30 zu übermitteln.

Ebenfalls ist es in einer weiteren Ausführungsform der Erfindung gemäß Figur 1 denkbar, eine Übertragung der Betriebsparameter 1, 2 über die erste Kommunikationsschnittstelle 22 zur zweiten Kommunikationsschnittstelle 32 optisch auszugestalten. Diese optische Freiraumübertragung ist mit dem Bezugszeichen 7 angedeutet. Bei dieser Ausführungsalternative sind sämtliche erste Kommunikationsschnittstellen 22 der Elektronikeinheit 20 für eine optische Freiraumübertragung ausgestaltet, welches ebenfalls für die zweite Kommunikationsschnittstelle 32 gilt.

In Figur 1 ist eine weitere Alternative zur Übertragung der Betriebsparameter 1, 2 von der Elektronikeinheit 20 zur Zentraleinheit 30 gezeigt, wobei die Übertragung über wenigstens einen Lichtwellenleiter 3 erfolgt, der zwischen der ersten Kommunikationsschnittstelle 23 und der zweiten Kommunikationsschnittstelle 33 angeordnet ist. Das bedeutet, dass sämtliche Elektronikeinheiten optisch, über Lichtwellenleiter 3 die Betriebsparameter "kabelgebunden" der Zentraleinheit 30 übertragen.

Selbstverständlich ist es in einer Ausführungsform der Erfindung, die nicht explizit dargestellt ist, möglich, die Vielzahl an Elektronikeinheiten 20 mit unterschiedlichen ersten Kommunikationsschnittstellen 21, 22, 23 auszuführen, durch die Betriebsparameter 1, 2 sowohl optisch, über Funk als auch über einen Lichtwellenleiter 3 der Zentraleinheit 30 übermittelt werden. Hierfür können beispielsweise unterschiedliche zweite Kommunikationsschnittstellen 31, 32, 33 vorgesehen sein, um die Betriebsparameter 1, 2 entsprechend zu empfangen und weiterzuleiten.

Gemäß Figur 2 ist eine weitere Alternative einer Vorrichtung zur Überwachung eines Energiespeichers 10 dargestellt. Der wesentliche Unterschied zu dem Ausführungsbeispiel gemäß Figur 1 ist lediglich, dass alle Energiezellen 11 des Energiespeichers 10 mit einer gemeinsamen Elektronikeinheit 20 verbunden sind, wohingegen in Figur 1 jeder Energiezelle 11 dediziert eine Elektronikeinheit 20 zugeordnet ist. Eine Übertragung der Betriebsparameter 1, 2 kann, wie in Figur 1 bereits beschrieben, in Figur 2 sowohl über eine Funkübertragung 6 und/oder eine optische Freiraumübertragung 7 und/oder über eine optische Übertragung mittels Lichtwellenleiter 3 erfolgen. Auch hier sind entsprechende erste Kommunikationsschnittstellen 21, 22, 23 an der Elektronikeinheit 20 sowie zweite Kommunikationsschnittstellen 31, 32, 33 an der Zentraleinheit 30 vorgesehen.

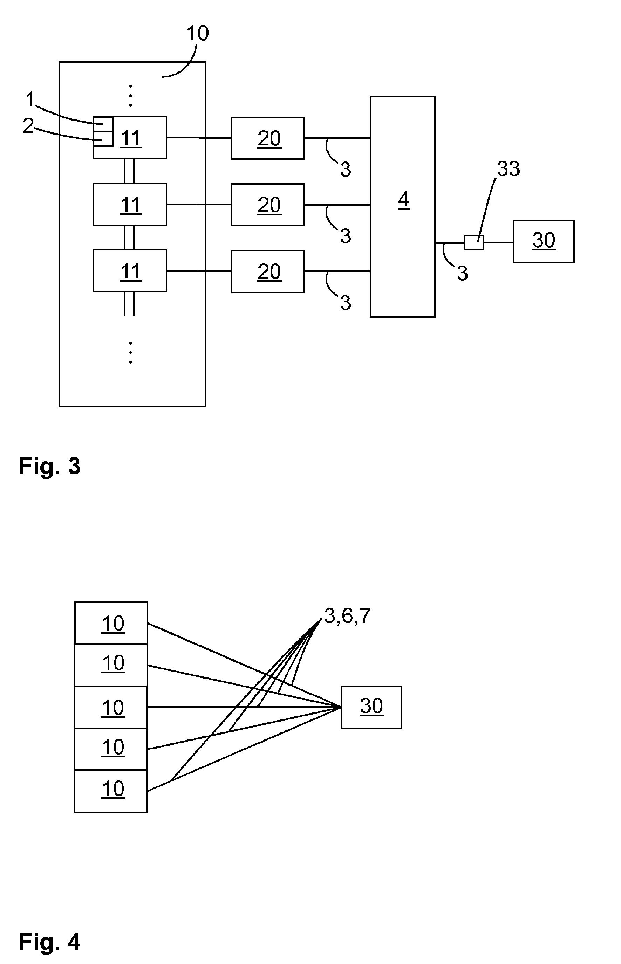

Gemäß Figur 3 wird eine weitere Ausführungsalternative gezeigt, bei der eine optische Übertragung der Betriebsparameter 1, 2 über Lichtwellenleiter 3 erfolgt. Die Betriebsparameter 1, 2 werden aus jeder Energiezelle 11 durch jede Elektronikeinheit 20 herausgelesen und über einen Lichtwellenleiter 3 zur Zentraleinheit 30 übertragen. Hierbei weist die Vorrichtung eine Vielzahl an parallel verlaufenden Lichtleitern 3 auf, die von der Elektronikeinheit 20 in einen Sammellichtleiter 4 führen. Der Sammellichtleiter 4 weist an seiner Ausgangsseite zumindest einen Lichtleiter 3 auf, der in der zweiten Kommunikationsschnittstelle 33 der Zentraleinheit 30 mündet. Damit die ermittelten Betriebsparameter 1, 2 zuverlässig über den Lichtwellenleiter 3 zur Zentraleinheit 30 übertragen werden können, befindet sich zwischen jeder Elektronikeinheit 20 und dem eigentlichen Lichtwellenleiter 3 ein elektrisch-optischer Umsetzer, der elektrische Informationen in optische Informationen umsetzt. Vor der Schnittstelle 33 befindet sich ein optisch-elektrischer Umsetzer, der optische Informationen in elektrische Informationen umsetzt. Das gleiche gilt selbstverständlich bei der Lichtwellenleiterübertragung gemäß Figur 1 und Figur 2.

In Figur 4 ist eine weitere Alternative einer Vorrichtung zur Überwachung von Energiespeichern 10 dargestellt. Die Zentraleinheit 30 ist ebenfalls galvanisch zu jeder Elektronikeinheit jedes Energiespeichers 10 getrennt. Für die Überwachung aller Energiespeicher 10 ist lediglich eine Zentraleinheit 30 vorgesehen, zu der die Betriebsparameter jedes Energiespeichers 10 über eine Funkübertragung 6, optische Freiraumübertragung 7 und/oder eine optische Übertragung mittels Lichtwellenleiter 3 realisierbar ist.

Gemäß allen dargestellten Ausführungsbeispielen sind diskrete Zeitabstände vorgesehen, in denen eine Übertragung der Betriebsparameter 1, 2 durch die Elektronikeinheit 20 erfolgt. Hierbei erfolgt die Übertragung in einem Zeitintervall von mindestens einer Sekunde. Jede Elektronikeinheit 20 und die Zentraleinheit 30 tauschen einen Informationsgehalt der Betriebsparameter 1, 2 über ein Protokoll aus, dass Telegramme mit einer Länge von 32 Bit bis 265 Bit austauscht.

Die Übertragung der Betriebsparameter 1, 2 erfolgt vorzugsweise über die Technologie ZigBee. Einer der Vorzüge von ZigBee ist in der niedrigen Stromaufnahme zu sehen, wobei eine hohe Anzahl von Kommunikationsteilnehmern möglich ist, d. h. Elektronikeinheiten 20 und Zentraleinheiten 30 - in Abhängigkeit vom jeweiligen Anwendungsfall - in ausreichender Anzahl miteinander kommunizieren können. Des Weiteren zeichnet sich ZigBee durch eine einfache Funktechnologie aus, die robust ist und darüber hinaus kleine Bauformen der Endgeräte ermöglicht. In Abhängigkeit vom individuellen Anwendungsfall sind selbstverständlich alternative Funkübertragungen und/oder optische Übertragungen sowie Übertragungen über den Lichtwellenleiter denkbar.

Hinsichtlich des Betriebsparameters 1 der Zellentemperatur ist es beispielsweise gemäß Figur 1 sowie der übrigen dargestellten Ausführungsalternativen denkbar, dass die Elektronikeinheit 20 ein Sensorelement 5 aufweist, welches für jede Energiezelle 11 die Temperatur sensiert und die entsprechende Information der Elektronikeinheit 20 übermittelt. Das Sensorelement 5 kann beispielsweise als Heißleiter ausgeführt sein, der seinen Widerstand bei Temperaturerhöhung verringert. Der Heißleiter kann beispielsweise auch aus Keramik oder aus Silizium bestehen. Ebenfalls ist es denkbar, den Temperatursensor 5 als Kaltleiter auszuführen, der seinen Widerstand bei Temperaturerhöhung ändert. Auch sind integrierte Halbleiter-Temperatursensoren denkbar, um eine entsprechende Temperatur jeder Energiezelle 11 zu ermitteln. Alternative Temperatursensorelemente wie beispielsweise Wärmefüller mit Schwingquarz als Messelement, Thermoelemente oder faseroptische Temperatursensoren sind ebenfalls zur Ermittlung der Temperatur jeder einzelnen Energiezelle 11 möglich. Das Sensorelement 5 kann unmittelbar an der Energiezelle 11 angeordnet sein, wie es in Figur 1 vereinfacht dargestellt ist. Selbstverständlich kann das Sensorelement auch beabstandet von der Energiequelle 11 positioniert sein.

Sensorelemente, die den Betriebsparameter 1 (Temperatur) und/oder den Betriebsparameter 2 (Spannung) ermitteln, sind selbstverständlich in den Aus-führungsbeispielen gemäß Figur 2 und Figur 4 einsetzbar, welches jedoch nicht explizit dargestellt ist.

Ein besonderer Vorteil der dargestellten Ausführungsformen ist, dass die erfindungsgemäße Vorrichtung zur Überwachung des Energiespeichers 10 als Baukastensystem ausgeführt sein kann. Das Baukastensystem besteht hierbei aus einer Einheit 12 zur Batteriezellenüberwachung und einem oder mehreren Adaptern 24 für die Übertragung der Betriebsparameter 1, 2. Der Adapter 24 umfasst hierbei die erste Kommunikationsschnittstelle 21, 22, 23. Die Einheit 12 hingegen umfasst die Schaltung, die zum Herauslesen der Betriebsparameter 1, 2 bis zur Elektronikeinheit 20 notwendig ist. Hierdurch wird ein flexibles und modulares Baukastensystem bereitgestellt, welches für den Benutzer Konstruktionsfreiheiten schafft, insbesondere hinsichtlich der Übertragung der Betriebsparameter 1, 2, von der ersten Kommunikationsschnittstelle 21, 22, 23 zur zweiten Kommunikationsschnittstelle 31, 32, 33. Das bedeutet, dass der Benutzer eines derartigen Überwachungssystems für den Energiespeicher modulweise seine Übertragungsart, d. h. optisch oder über Funk oder über einen Lichtwellenleiter auswählen kann. Hierdurch wird die Attraktivität und Flexibilität der Gesamtvorrichtung zur Überwachung eines oder mehrerer Energiespeicher 10 wesentlich erhöht. Die Einheit 12 ist mit derartigen Schnittstellen ausgeführt, dass jegliche, unterschiedlich ausgeführte Adapter 24 für Funkübertragung, optische Freiraumübertragung oder Lichtwellenleiterübertragung mit der Einheit 12 verbunden werden können.

### Bezugszeichenliste

- 1: Betriebsparameter, Temperatur
- 2: Betriebsparameter, Spannung
- 3: Lichtwellenleiter
- 4: Sammellichtleiter
- 5: Sensorelement
- 6: Übertragung (Funk)
- 7: Übertragung (optisch über Freiraum)
- 10: Energiespeicher
- 11: Energiezelle
- 12: Einheit zur Energiezellenüberwachung, Überwachungsschaltung
- 20: Elektronikeinheit
- 21: erste Kommunikationsschnittstelle, Funk
- 22: erste Kommunikationsschnittstelle, optisch über Freiraum
- 23: erste Kommunikationsschnittstelle, optisch über Lichtwellenleiter
- 24: Adapter
- 30: Zentraleinheit
- 31: zweite Kommunikationsschnittstelle
- 32: zweite Kommunikationsschnittstelle
- 33: zweite Kommunikationsschnittstelle

## Patentansprüche

1. Vorrichtung zur Überwachung eines Energiespeichers (10), der wenigstens eine Energiezelle (11) aufweist, aus der zumindest ein Betriebsparameter (1,2) über eine Elektronikeinheit (20) auslesbar ist, wobei der Betriebsparameter (1,2) einer Zentraleinheit (30) übertragbar ist,
**dadurch gekennzeichnet,**
**dass** die Zentraleinheit (30) galvanisch von der Elektronikeinheit (20) getrennt ist, deren energetische Versorgung über den Energiespeicher (10) erfolgt.

2. Vorrichtung nach Anspruch 1,
**dadurch gekennzeichnet,**
**dass** die Elektronikeinheit (20) eine erste Kommunikationsschnittstelle (21,22,23) aufweist und die Zentraleinheit (30) eine zweite Kommunikationsschnittstelle (31, 32,33) aufweist, insbesondere die erste (21,22,23) und/oder die zweite Kommunikationsschnittstelle (31,32,33) eine Sende- und/oder Empfangseinheit aufweist.

3. Vorrichtung nach Anspruch 1 oder 2,
**dadurch gekennzeichnet,**
**dass** die Betriebsparameter (1,2) optisch und/oder über Funk und/oder über wenigstens einen Lichtwellenleiter (3) übermittelbar sind.

4. Vorrichtung nach einem der vorhergehenden Ansprüche,
**dadurch gekennzeichnet,**
**dass** jeder Energiezelle (11) dediziert eine Elektronikeinheit (20) zugeordnet ist.

5. Vorrichtung nach einem der Ansprüche 1 bis 3,
**dadurch gekennzeichnet,**
**dass** allen Energiezellen (11) eine gemeinsame Elektronikeinheit (20) zugeordnet ist.

6. Vorrichtung nach einem der vorhergehenden Ansprüche,
**dadurch gekennzeichnet,**
**dass** die Betriebsparameter (1,2) optisch und über Funk
oder optisch und über den Lichtwellenleiter (3)
oder über Funk und über den Lichtwellenleiter (3)
oder optisch und über Funk und über den Lichtwellenleiter (3) an die Zentraleinheit (30) übermittelbar sind.

7. Vorrichtung nach einem der vorhergehenden Ansprüche,
**dadurch gekennzeichnet,**
**dass** die Elektronikeinheit (20) und die Zentraleinheit (30) einen Informationsgehalt der Betriebsparameter (1,2) über ein Protokoll austauschen, das Telegramme mit einer Länge von 32 Bit und bis 256 Bit, insbesondere mit einer Länge von 54 Bit bis 128 Bit austauscht.

8. Vorrichtung nach einem der vorhergehenden Ansprüche,
**dadurch gekennzeichnet,**
**dass** diskrete Zeitabstände vorgesehen sind, in denen eine Übertragung der Betriebsparameter (1,2) durch die Elektronikeinheit (20) erfolgt, insbesondere in einem Intervall von mindestens einer 1 Sekunde eine Übertragung der Betriebsparameter (1,2) durch die Elektronikeinheit (20) erfolgt.

9. Vorrichtung nach einem der vorhergehenden Ansprüche,
**dadurch gekennzeichnet,**
**dass** die Übertragung der Betriebsparameter (1, 2) über wenigstens eine der folgenden Technologien erfolgt: Bluetooth, Near Field Communination (NFC), Wireless Local Area Network (WLAN), WiMAX, Wireless USB, ZigBee (IEEE 802.15.4), Wibree, WPAN, GSM, GPRS, UMTS, HSCSD oder HSDPA,
induktive Datenübertragung, kapazitive Datenübertragung,
Infrared Data Association (IrDA), FSO (Free Space Optics).

10. Vorrichtung nach Anspruch 9,
**dadurch gekennzeichnet,**
**dass** das Protokoll zur Übertragung der Betriebsparameter (1,2) über den ZigBee-Standard erfolgt, wobei die physikalische Übertragung des Informationsgehaltes der Betriebsparameter (1,2) optisch erfolgt, insbesondere über den IrDA-Standard erfolgt.

11. Vorrichtung nach einem der vorhergehenden Ansprüche,
**dadurch gekennzeichnet,**
**dass** zwischen der Elektronikeinheit (20) und der Zentraleinheit (30) eine Vielzahl an Lichtwellenleiter (3) angeordnet sind, die in einen optischen Sammellichtleiter (4) führen, wobei der Sammellichtleiter (4) über zumindest einen Lichtwellenleiter (3) mit der Zentralreinheit (30) verbunden ist.

12. Vorrichtung nach einem der vorhergehenden Ansprüche,
**dadurch gekennzeichnet,**
**dass** die Zentraleinheit (30) anhand der Betriebsparameter (1,2) den Betrieb des Energiespeichers (10), insbesondere der Energiezelle (11) steuert und/oder regelt.

13. Vorrichtung nach einem der vorhergehenden Ansprüche,
**dadurch gekennzeichnet,**
**dass** die Elektronikeinheit (20) ein Sensorelement (5) für jede Energiezelle (11) aufweist, wobei das Sensorelement (5) mindestens einen Betriebsparameter (1, 2) erfasst.

14. Vorrichtung nach einem der vorhergehenden Ansprüche,
**dadurch gekennzeichnet,**
**dass** eine Vielzahl von Energiespeichern (10) mit einer gemeinsamen Zentraleinheit (30) kommuniziert.

15. Vorrichtung nach einem der vorhergehenden Ansprüche,
**dadurch gekennzeichnet,**
**dass** ein Baukastensystem vorgesehen ist, welches eine Einheit (12) zur Energiezellenüberwachung und mindestens einen Adapter (24) für die Übertragung der Betriebsparameter (1, 2) aufweist.
